# EUROPEAN PATENT APPLICATION

(11) **EP 3 537 824 A1**
(43) Date of publication of application: **11.09.2019**
(21) Application number: 17867417.2
(22) Date of filing: 25.08.2017
(51) Int. Cl.: H04W 72/12, H04W 28/06, H04W 72/04, H04W 72/14

(54) **BASE STATION AND USER DEVICE**

(30) Priority: 02.11.2016 JP 2016215705
(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/030466
(87) International publication number: WO 2018/083867

(57) **Abstract**

Disclosed is a downlink signal configuration for transmitting a downlink control signal for uplink transmission in a radio communication system capable of performing uplink transmission by a plurality of communication schemes. An aspect of the present invention relates to a base station including a scheduler configured to schedule radio resources to user equipment capable of performing uplink transmission by a plurality of communication schemes; and a scheduling information notification unit configured to notify scheduling information indicating the radio resources scheduled to the user equipment for the uplink transmission, wherein the scheduling information indicates a start radio resource block group among contiguously scheduled radio resource block groups and a number of scheduled radio resource block groups.

## Description

### TECHNICAL FIELD

The present invention relates to a radio communication system.

### BACKGROUND ART

In third generation partnership project (3GPP), long term evolution (LTE) and next generation communication standards (5G and NR) as an LTE-Advanced have been discussed. In the NR system, in order to simultaneously achieve both super high speed/large capacity and coverage, it has been considered to combine orthogonal frequency division multiplexing (OFDM) and discrete Fourier transform (DFT)-s-OFDM in uplink (UL) transmission.

In this case, typically, user equipment (UE) in the vicinity of the center of a cell can be controlled to use the OFDM to which a higher rank with a lower transmission power can be applied in order to achieve high throughput. User equipment in the vicinity of the edge of a cell can only apply a rank lower than the OFDM in order to achieve wide coverage. However, the user equipment is controlled by using the DFT-s-OFDM with a small peak-to-average power ratio (PAPR) and increasing a transmission power so as to realize a wide coverage.

### SUMMARY OF THE INVENTION

### [PROBLEM TO BE SOLVED BY THE INVENTION]

As described above, in the NR system, the uplink transmission by different communication schemes (waveforms or the like) is assumed. However, in the uplink transmission by different communication schemes, specific signal configurations for transmitting a downlink control signal such as scheduling information has not been studied.

In view of the above-described problems, the present invention is to provide a downlink signal configuration for transmitting a downlink control signal for uplink transmission in a radio communication system capable of performing uplink transmission by a plurality of communication schemes.

### [MEANS FOR SOLVING THE PROBLEM]

In order to solve the above-described problem, an aspect of the present invention relates to a base station including a scheduler configured to schedule radio resources to user equipment capable of performing uplink transmission by a plurality of communication schemes; and a scheduling information notification unit configured to notify scheduling information indicating the radio resources scheduled to the user equipment for the uplink transmission, wherein the scheduling information indicates a start radio resource block group among contiguously scheduled radio resource block groups and a number of scheduled radio resource block groups.

### [ADVANTAGE OF THE INVENTION]

According to the present invention, a downlink signal configuration can be provided which is for transmitting a downlink control signal for uplink transmission in a radio communication system capable of performing uplink transmission by a plurality of communication schemes.

### BRIEF DESCRIPTION OF DRAWINGS

Fig. 1 is a schematic diagram illustrating a radio communication system according to an embodiment of the present invention;
Fig. 2 is a block diagram illustrating a functional configuration of a base station according to an embodiment of the present invention;
Fig. 3 is a block diagram illustrating a functional configuration of user equipment according to an embodiment of the present invention;
Fig. 4 is a schematic diagram illustrating a scheduling information notification scheme according to a first embodiment of the present invention;
Fig. 5 is a schematic diagram illustrating a scheduling information notification scheme according to a second embodiment of the present invention;
Fig. 6 is a schematic diagram illustrating a scheduling information notification scheme according to a third embodiment of the present invention;
Fig. 7 is a schematic diagram illustrating a scheduling information notification scheme according to a fourth embodiment of the present invention;
Fig. 8 is a schematic diagram illustrating a scheduling information notification scheme according to a fifth embodiment of the present invention;
Fig. 9 is a schematic diagram illustrating a scheduling information notification scheme according to a sixth embodiment of the present invention;
Fig. 10 is a schematic diagram illustrating a scheduling information notification scheme according to a seventh embodiment of the present invention;
Fig. 11 is a schematic diagram illustrating MCS information for DFT-s-OFDM and OFDM according to one embodiment of the present invention;
Fig. 12 is a schematic diagram illustrating MCS information for DFT-s-OFDM and OFDM according to one embodiment of the present invention; and
Fig. 13 is a block diagram illustrating a hardware configuration of user equipment and a base station according to an embodiment of the present invention.

### [EMBODIMENTS OF THE INVENTION]

In the following, embodiments of the present invention are described with reference to the drawings.

In the following embodiments, a radio communication system capable of performing uplink transmission by a plurality of communication schemes is disclosed. To summarize the embodiment to be described below, a base station notifies a radio resource scheduled to the user equipment for uplink transmission by various signal configurations using a bit map indicating the presence or absence of allocation of each radio resource block or each radio resource block group or using a preceding radio resource block or radio resource block group, the number of allocated radio resource blocks, and/or an allocation pattern with respect to radio resource blocks or radio resource block groups having continuity and periodicity.

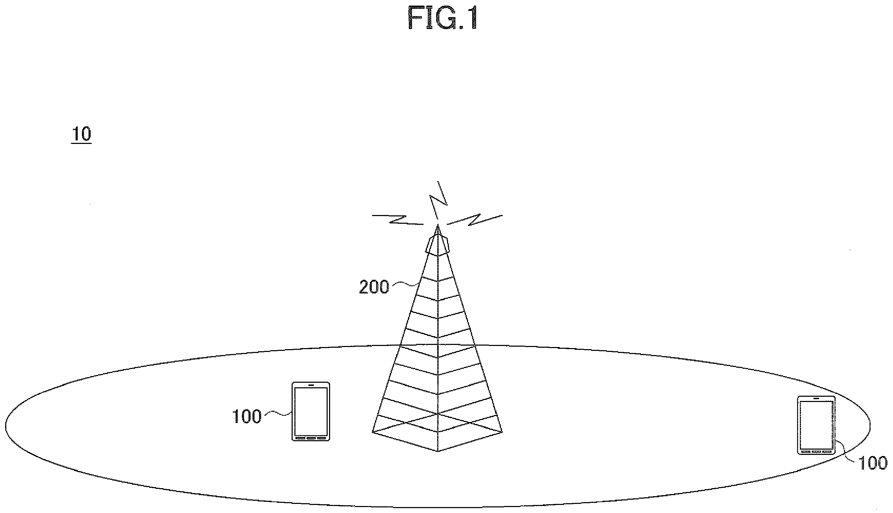

First, a radio communication system according to an embodiment of the present invention will be described with reference to Fig. 1. Fig. 1 is a schematic diagram illustrating the radio communication system according to the embodiment of the present invention.

As illustrated in Fig. 1, the radio communication system 10 is configured to include user equipment 100 and a base station 200. In the following embodiment, the radio communication system 10 is a radio communication system (for example, a 5G or NR system) in accordance with the 3GPP Rel-14 or later standards. However, the present invention is not limited thereto, and any other radio communication system capable of performing uplink transmission by different communication schemes (waveforms) such as OFDM and DFT-s-OFDM may be used.

The user equipment 100 is any appropriate information processing device having a wireless communication function of a smartphone, a mobile phone, a tablet, a wearable terminal, a communication module for machine-to-machine (M2M), or the like and wirelessly connects to the base station 200 to utilize various communication services provided by the radio communication system 10.

The base station 200 provides one or more cells and wirelessly communicates with the user equipment 100. Although only one base station 200 is illustrated in the illustrated embodiment, in general, a number of the base stations 200 are arranged to cover a coverage area of the radio communication system 10.

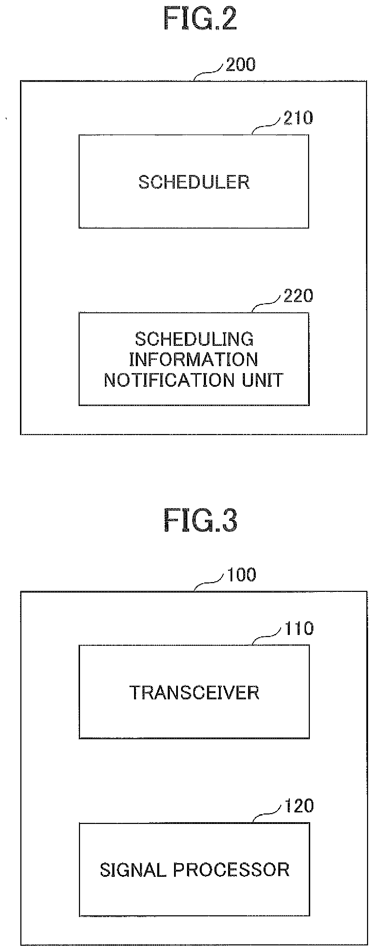

Next, the base station according to the embodiment of the present invention will be described with reference to Fig. 2. Fig. 2 is a block diagram illustrating a functional configuration of the base station according to the embodiment of the present invention.

As illustrated in Fig. 2, the base station 200 is configured to include a scheduler 210 and a scheduling information notification unit 220.

The scheduler 210 schedules radio resources to the user equipment 100 capable of performing uplink transmission by a plurality of communication schemes. Specifically, the scheduler 210 schedules radio resources used for downlink communication and uplink communication with the user equipment 100. For example, the scheduler 210 may allocate radio resources to the user equipment 100 on the basis of various factors such as measured communication qualities of downlink channel and uplink channel, communication status of communication with a different user equipment 100, and the like. In the following embodiments, particularly, attention is paid to the scheduling of radio resources for uplink transmission.

The scheduling information notification unit 220 notifies scheduling information indicating radio resources scheduled to the user equipment 100 for uplink transmission. Namely, the scheduling information notification unit 220 notifies, to the user equipment 100, the scheduling information indicating radio resources for uplink transmission scheduled to the user equipment 100 by the scheduler 210. For example, the scheduling information may be notified by a downlink control channel (physical downlink control channel (PDCCH) or the like). In the following embodiments, as described later, the scheduling information specifies each radio resource block (RB) or each radio resource block group (RBG) configured with two or more radio resource blocks by an index or a frequency position of the RB or the RBG.

Next, the user equipment according to the embodiment of the present invention will be described with reference to Fig. 3. The user equipment according to the embodiment can perform uplink transmission by a plurality of communication schemes. For example, the user equipment supports two communication schemes (waveforms) such as a multi-carrier scheme such as OFDM and a single carrier scheme such as DFT-s-OFDM and performs uplink transmission while switching these communication schemes. Fig. 3 is a block diagram illustrating a functional configuration of the user equipment according to the embodiment of the present invention.

As illustrated in Fig. 3, the user equipment 100 is configured to include a transceiver 110 and a signal processor 120.

The transceiver 110 transmits and receives radio signals to and from the base station 200. Specifically, the transceiver 110 transmits and receives various radio signals such as uplink/downlink control signals and uplink/downlink data signals to/from the base station 200. In the embodiment, the transceiver 110 transmits an uplink signal while switching between different communication schemes (waveforms) such as OFDM and DFT-s-OFDM.

In the NR system, as the uplink waveform configurations, several types of configurations such as (1) both the OFDM and the DFT-s-OFDM are applicable and dynamically switched (at a predetermined time interval such as a subframe, a slot, or a mini-slot); (2) both the OFDM and the DFT-s-OFDM are applicable and semi-statically switched (at a fixed time interval, by a predetermined trigger, or the like); and (3) only the OFDM is applicable are considered. Which type of waveform configuration to apply is notified, for example, from the base station 200 to the user equipment 100. The transceiver 110 performs uplink transmission according to any one of the OFDM and the DFT-s-OFDM communication schemes according to the waveform configuration notified from the base station 200.

The signal processor 120 processes a radio signal. Specifically, the signal processor 120 generates an uplink signal for transmission to the base station 200, provides the generated uplink signal to the transceiver 110, and also processes a downlink signal received by the transceiver 110.

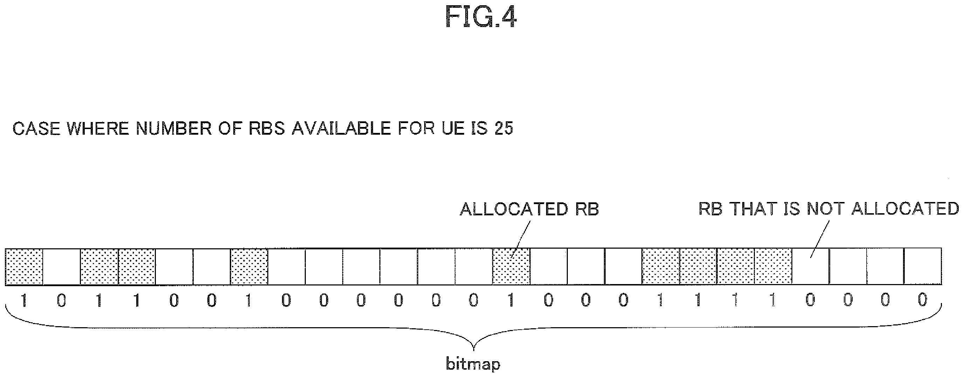

Next, a scheduling information notification scheme according to the first embodiment of the present invention will be described with reference to Fig. 4. In the first embodiment, the scheduling information indicates the presence or absence of allocation of each radio resource block. Namely, the scheduling information indicates, in units of a radio resource block, whether or not each radio resource block is allocated to the user equipment 100 for uplink transmission, for all the radio resource blocks which can be used by the user equipment 100.

As illustrated in Fig. 4, for example, in the case where the user equipment 100 can use 25 RBs, the scheduling information indicates the presence or absence of allocation of each of the 25 radio resource blocks. Specifically, in the case where the radio resource block is allocated to the user equipment 100 for uplink transmission, the scheduling information may indicate the radio resource block by "1", and in the case where the radio resource block is not allocated to the user equipment 100 for uplink transmission, the scheduling information may indicate the radio resource block by "0". Herein, the information indicating the presence or absence of allocation of each radio resource block may be referred to as a bit map.

According to the embodiment, since the presence or absence of allocation is indicated for all the radio resource blocks that can be used by the user equipment 100, it is possible to perform flexible scheduling.

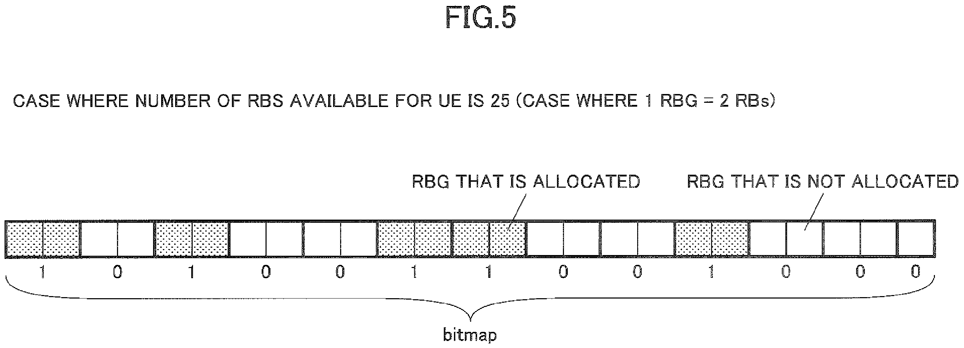

Next, a scheduling information notification scheme according to a second embodiment of the present invention will be described with reference to Fig. 5. In the second embodiment, the scheduling information indicates the presence or absence of allocation of each radio resource block group configured with two or more consecutive radio resource blocks. Namely, the scheduling information indicates, in units of a radio resource block group, whether or not each radio resource block group is allocated to the user equipment 100 for uplink transmission, for all the radio resource blocks which can be used the user equipment 100.

As illustrated in Fig. 5, for example, in the case where the user equipment 100 can use 25 RBs, the scheduling information indicates the presence or absence of allocation of each radio resource block group. In the illustrated example, each radio resource block group is configured with two radio resource blocks, but not limited thereto. Specifically, in the case where the radio resource block group is allocated to the user equipment 100 for uplink transmission, the scheduling information may indicate the radio resource block group by "1", and in the case where the radio resource block group is not allocated to the user equipment 100 for uplink transmission, the scheduling information may indicate the radio resource block group by "0". In this case, the bitmap indicates the presence or absence of allocation of each radio resource block group.

In addition, the number of resource blocks included in each radio resource block group may be constant or may be variable according to the number of resource blocks that can be used by the user equipment 100 and/or the number of resource blocks of the entire radio communication system 10. In addition, the number of resource blocks included in the radio resource block may be notified from the base station 200 or may be uniquely defined with respect to the number of resource blocks that can be used by the user equipment 100 and/or the number of resource blocks of the entire radio communication system 10. In the latter case, the number of resource blocks included in the radio resource block need not be notified.

According to the embodiment, in comparison with the first embodiment, it is possible to reduce the number of bits for notifying the scheduling information.

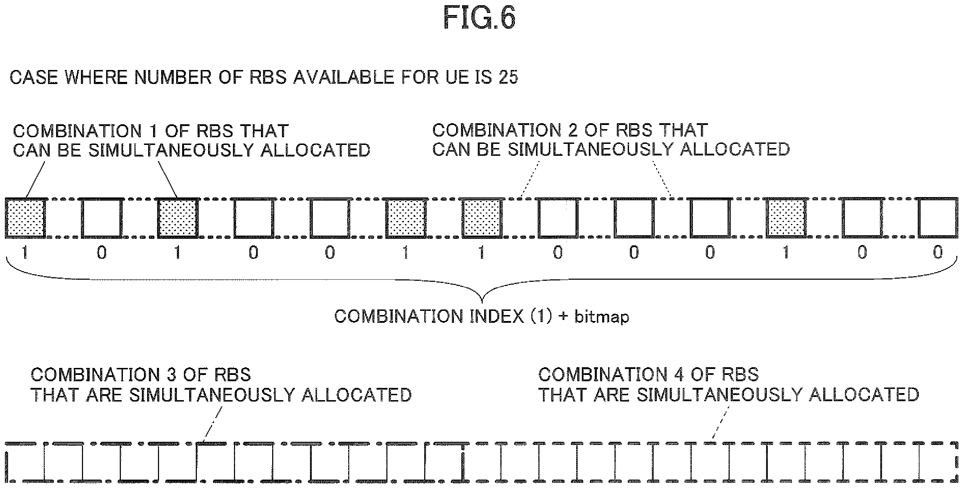

Next, a scheduling information notification scheme according to a third embodiment of the present invention will be described with reference to Fig. 6. In the third embodiment, the scheduling information indicates a combination of predetermined radio resource blocks and the presence or absence of allocation of each radio resource block in the combination. Namely, a plurality of combinations of radio resource blocks that can be simultaneously allocated are defined in advance, and the scheduling information indicates one combination of predetermined radio resource blocks that can be allocated and the presence or absence of allocation of each radio resource block in the combination.

As illustrated in Fig. 6, for example, in the case where the user equipment 100 can use 25 RBs, the scheduling information includes the index of combination of radio resource blocks that can be simultaneously allocated and the presence or absence of allocation of each radio resource block in the combination. In the illustrated example, Combination "1" configured with odd-numbered radio resource blocks from the left is specified, and a bit map indicating whether or not each radio resource block of the combination is allocated is indicated by "1010011000100". In this case, the scheduling information indicates Combination "1" and Bitmap "1010011000100".

In the example illustrated on the upper side of Fig. 6, Combination 1 configured with the odd-numbered radio resource blocks and Combination 2 configured with the even-numbered radio resource blocks are defined, but the present invention is not limited thereto. Combinations 3 and 4 configured with consecutive resource blocks as illustrated on the lower side of Fig. 6 may also be defined. As other combinations, combinations discretely configured at an interval of N resource blocks and/or combinations configured by mixing contiguous resource blocks and discrete resource blocks may be defined. The pattern of selectable combination may be selected from a plurality of patterns of combinations or may be defined in advance in the specifications.

According to the embodiment, in comparison with the second embodiment, since a plurality of combinations of radio resource blocks that can be simultaneously allocated are defined, it is possible to perform flexible scheduling.

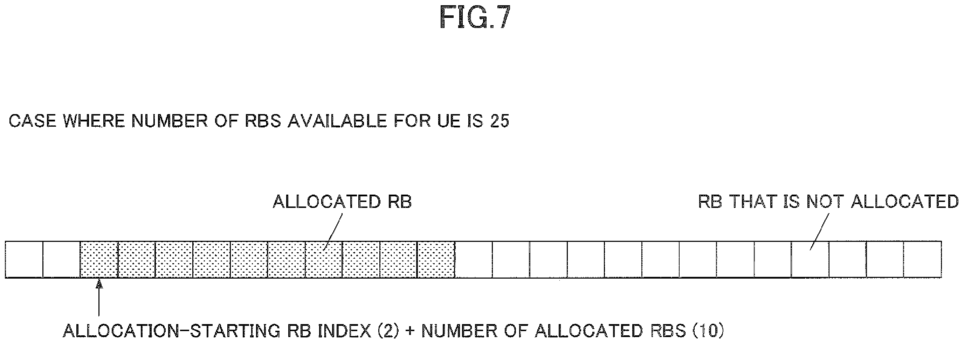

Next, a scheduling information notification scheme according to a fourth embodiment of the present invention will be described with reference to Fig. 7. In the fourth embodiment, the scheduling information indicates the preceding radio resource block among the contiguously scheduled radio resource blocks and the number of radio resource blocks scheduled. Namely, in the case where consecutive radio resource blocks can be allocated, the allocated radio resource block can be specified by the position (RB index) of the preceding radio resource block and the number of allocated radio resource blocks (the number of RBs).

As illustrated in Fig. 7, the scheduling information indicates the position (RB index) of the preceding radio resource block among the allocated consecutive radio resource blocks and the number (RB number) of allocated radio resource blocks. In the illustrated example, the RB index "2" and the number of radio resource blocks "10" are specified by the scheduling information, and ten consecutive radio resource blocks starting from the third radio resource block from the left are allocated

According to the embodiment, in comparison with the embodiment using the bitmap, it is possible to reduce the number of bits for notifying the scheduling information.

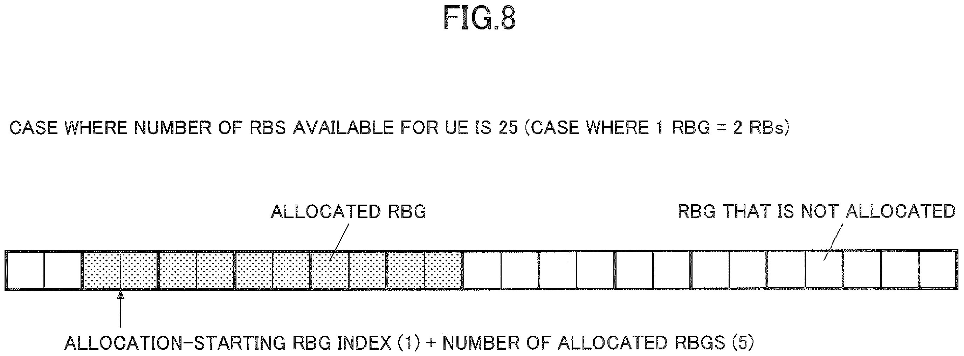

Next, a scheduling information notification scheme according to a fifth embodiment of the present invention will be described with reference to Fig. 8. In the fifth embodiment, the scheduling information indicates the preceding radio resource block group of the contiguously scheduled radio resource block groups and the number of scheduled radio resource block groups. Namely, in the case where consecutive radio resource block groups are to be allocated, the allocated radio resource block group can be specified by the position (RBG index) of the preceding radio resource block group and the number of allocated radio resource block groups (RBG number).

As illustrated in Fig. 8, the scheduling information indicates the position (RBG index) of the preceding radio resource block group of the allocated consecutive radio resource block groups and the number (RBG number) of allocated radio resource block groups. In the illustrated example, the RBG index "1" and the number of radio resource block groups "5" are specified by the scheduling information, and five consecutive radio resource block groups starting from the second radio resource block group from the left are allocated.

According to the embodiment, in comparison with the embodiments using the bit map and/or the fourth embodiment, it is possible to reduce the number of bits for notifying the scheduling information.

In addition, the number of resource blocks included in each radio resource block group may be constant or may be variable according to the number of resource blocks that can be used by the user equipment 100 and/or the number of resource blocks of the entire radio communication system 10. In addition, the number of resource blocks included in the radio resource block may be notified from the base station 200 or may be uniquely defined with respect to the number of resource blocks that can be used by the user equipment 100 and/or the number of resource blocks of the entire radio communication system 10. In the latter case, the number of resource blocks included in the radio resource block need not be notified.

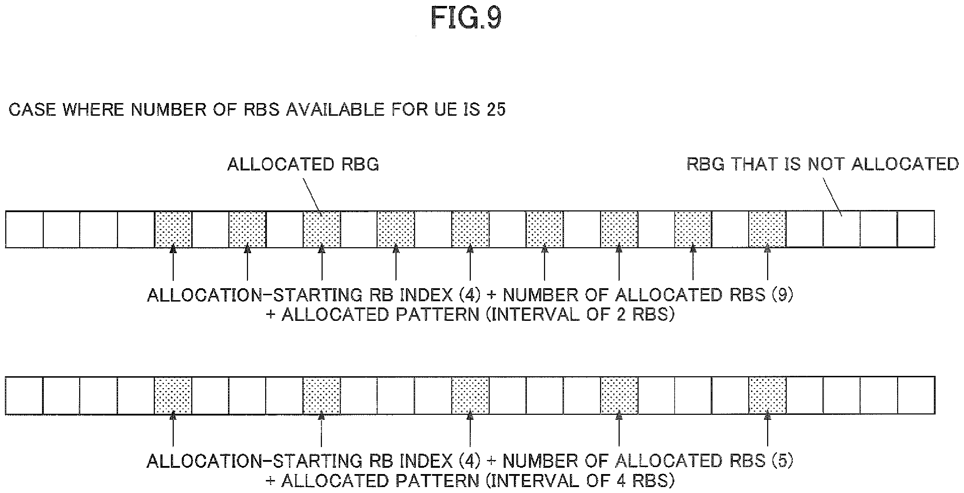

Next, a scheduling information notification scheme according to a sixth embodiment of the present invention will be described with reference to Fig. 9. In the sixth embodiment, the scheduling information indicates the preceding radio resource block among the radio resource blocks that are periodically scheduled, the number of scheduled radio resource blocks, and the allocated pattern of the scheduled radio resource blocks. Namely, in the case where the radio resource blocks are periodically allocated, the allocated radio resource blocks may be specified by position (RB index) of the preceding radio resource block, the number (RB number) of allocated radio resource blocks, and the pattern of the allocated radio resource blocks.

As illustrated in Fig. 9, the scheduling information indicates the position (RB index) of the preceding radio resource block, the number (RB number) of allocated radio resource blocks, and the pattern of the allocated radio resource blocks. In the example on the upper side of Fig. 9, the RB index "4", the number of RBs "9", and the allocation pattern (2-RB interval) are specified by the scheduling information, and nine radio resource blocks starting from the fifth radio resource block from the left are allocated at the interval of two resource blocks. In addition, in the example on the lower side of Fig. 9, the RB index "4", the number of RBs "5", and the allocation pattern (4-RB interval) are specified by the scheduling information, and five radio resource blocks starting from the fifth radio resource block from the left are allocated at the interval of four resource blocks.

In addition, the allocation pattern may be variable according to notification from the base station 200 or the like. Alternatively, the allocation pattern may be limited to a specific pattern (for example, an interval of the power of 2) according to the specification.

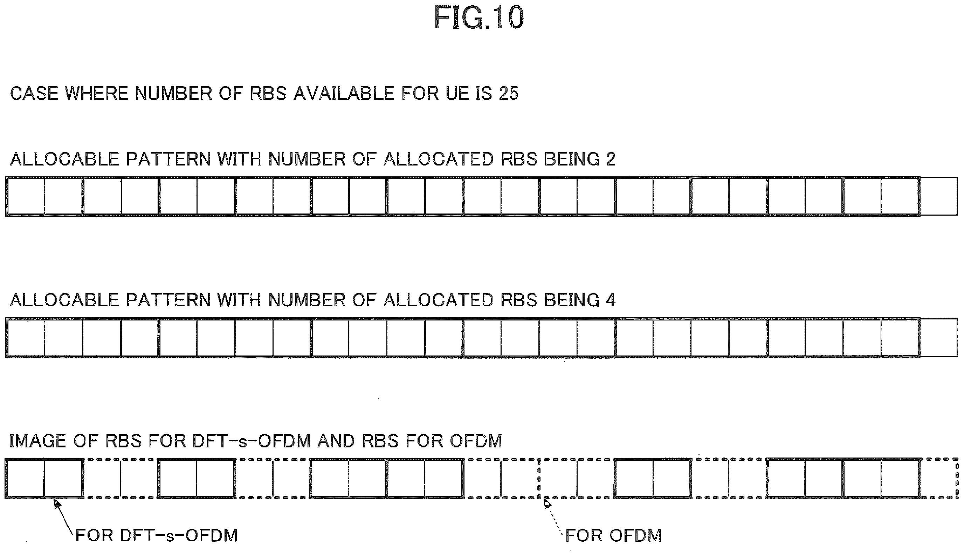

Next, a scheduling information notification scheme according to a seventh embodiment of the present invention will be described with reference to Fig. 10. In the seventh embodiment, the allocation pattern of radio resource blocks in the third embodiment is set for each communication scheme. In general, in the DFT-s-OFDM, consecutive radio resources need to be allocated. Therefore, a combination pattern of radio resource blocks for the DFT-s-OFDM may be defined in advance. Namely, the scheduling information indicates a combination of radio resource blocks defined for each communication scheme and the presence or absence of allocation of each radio resource block in the combination.

For example, in the example illustrated on the upper side of Fig. 10, a pattern configured with two consecutive radio resource blocks is illustrated, and in the example illustrated in the middle, a pattern configured with four consecutive radio resource blocks is illustrated. In the case where the DFT-s-OFDM is selected as the communication scheme, the scheduling information may be limited to an allocation pattern configured with any number of the consecutive radio resource blocks. On the other hand, in the OFDM, consecutive radio resource blocks need not to be allocated, but discrete radio resource blocks may be allocated. Therefore, the allocation pattern of radio resource blocks for the OFDM is not necessarily limited to the above-described allocation pattern of consecutive radio resource blocks, but the allocation pattern be appropriately defined. Alternatively, like the example illustrated on the lower side of Fig. 10, the radio resource blocks that are not used in the DFT-s-OFDM described above may be used. In the illustrated example, the allocation pattern of the DFT-s-OFDM and the allocation pattern of the OFDM do not overlap with each other. However, the present invention is not limited thereto, and the radio resource blocks for the allocation pattern of the DFT-s-OFDM and the radio resource blocks for the allocation pattern of the OFDM may overlap with each other. Namely, there may be radio resource blocks that can be allocated to any one of the DFT-s-OFDM and the OFDM. In this manner, the allocation pattern of radio resource blocks that can be selected according to communication scheme may be decided.

In addition, the allocation of the radio resource blocks for the OFDM and the radio resource blocks for the DFT-s-OFDM may be dynamically changed according to the number of units of user equipment 100 or the like. In addition, the user equipment 100 may decode only the allocation pattern defined according to the communication scheme. In addition, the allocation of the radio resource blocks for the OFDM and the Radio resource blocks for the DFT-s-OFDM may be configured in the base station 200 (eNB) and the user equipment 100 (UE) in advance. In addition, the allocation of the radio resource blocks for the OFDM and the radio resource blocks for the DFT-s-OFDM may be notified from the base station 200 (eNB) to the user equipment 100 (UE) by using broadcast information (MIB and/or SIB), a message (for example, an RA response (also referred to as Message 2)) in a random access procedure, a message (for example, RRC connection setup or RRC connection reconfiguration) in a connection setup (RRC (Radio Resource Control) connection setup or S1 connection setup) procedure, or the like.

Accordingly, it is possible to reduce the number of bits for notifying the scheduling information, and it is possible to reduce the number of downlink control channel (DCI) search candidates.

In addition, in one embodiment, the number of radio resource blocks that can be allocated corresponding to the selected communication scheme may be set. As described above, since the DFT-s-OFDM is used at the edge of a cell, there is a low possibility that a larger number of the radio resource blocks are allocated. Therefore, in the case where the DFT-s-OFDM is selected, the number of radio resource blocks that can be allocated may be limited in advance. Whereas, since the OFDM is used in the vicinity of the center of a cell, the number of radio resource blocks that can be allocated may be set to a predetermined value or more. Namely, in each of the embodiments described above, the upper limit or the lower limit of the number of radio resource blocks that can be allocated may be set for each communication scheme. Accordingly, the user equipment 100 may decode only the number of radio resource blocks defined according to the selected communication scheme. As a result, it is possible to reduce the number of bits for notifying the scheduling information, and it is possible to reduce the number of DCI search candidates.

As described above, in the DFT-s-OFDM, consecutive radio resources or radio resources that are arranged at an equal interval needs to be allocated, but in the OFDM, discrete radio resources may be allocated. As a result, the decoding of the scheduling information may be performed according to the selected communication scheme and the selected scheduling information notification scheme. Namely, in the case where the DFT-s-OFDM is selected as the communication scheme for uplink transmission, the signal processor 120 may decode the scheduling information only for the scheduling information notification schemes according to the fourth to sixth embodiments in which consecutive radio resources or radio resources arranged at an equal interval are allocated. On the other hand, in the case where the OFDM is selected as the communication scheme for uplink transmission, the signal processor 120 may decode the scheduling information for one any of the scheduling information notification schemes according to the first to sixth embodiments. Alternatively, the signal processor may decode the scheduling information only for the scheduling information notification schemes according to the fourth to sixth embodiments. In addition, the scheduling information notification scheme may be notified in advance from the base station 200. As a result, since the user equipment 100 needs to decode only the limited scheduling information, it is possible to simplify signal processing.

In addition, in one embodiment, a modulation scheme corresponding to an MCS (Modulation and Coding Scheme) index and/or MCS information indicating a transport block size (TBS) (or an encode rate) may be changed for each communication scheme, and the scheduling information notification unit 220 may further notify the MCS information set for each communication scheme to the user equipment 100.

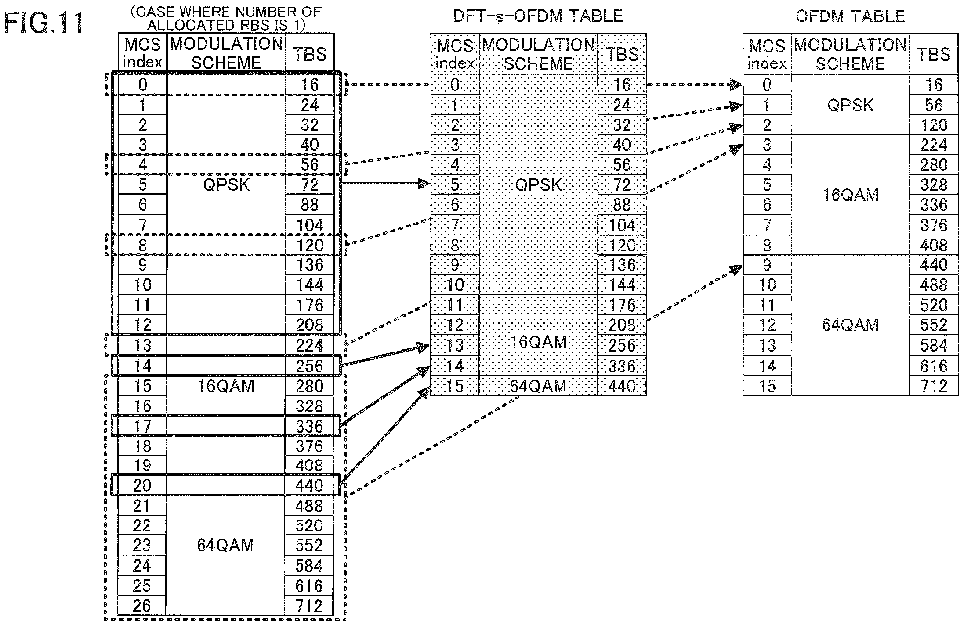

More specifically, an MCS information table for the DFT-s-OFDM and an MCS information table for the OFDM may be derived from an MCS information table as illustrated on the left side of Fig. 11. In the case where the DFT-s-OFDM is selected as the communication scheme, the transceiver 110 decides the modulation scheme and the TBS corresponding to the MCS index instructed from the base station 200 on the basis of the MCS information table for the DFT-s-OFDM by using the MCS information table for the DFT-s-OFDM. On the other hand, in the case where the OFDM is selected as the communication scheme, the transceiver 110 decides the modulation scheme and the TBS corresponding to the MCS index instructed from the base station 200 on the basis of the MCS information table for the OFDM by using the MCS information table for the OFDM. In the illustrated example, there are a modulation scheme and a TBS that are used in a duplicate manner in the MCS information table for the DFT-s-OFDM and the MCS information table for the OFDM, but the present invention is not limited thereto. The MCS information table for the DFT-s-OFDM and the MCS information table for the OFDM may be defined so that the modulation scheme and the TBS are not used in such a duplicate manner. Therefore, it is possible to reduce the number of bits for notifying the scheduling information, and it is possible to reduce the number of DCI search candidates.

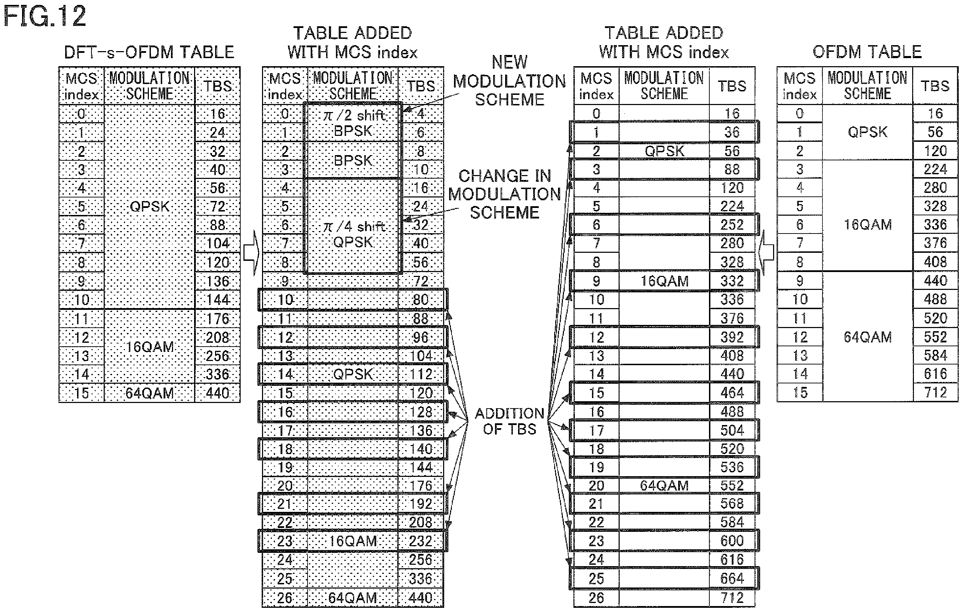

Furthermore, the MCS information table for the DFT-s-OFDM and/or the MCS information table for the OFDM described above may be expanded by adding another modulation scheme and/or another TBS. For example, as illustrated in Fig. 12, in the MCS information table for the DFT-s-OFDM, π/2-shift BPSK and π/4-shift QPSK are added as a new modulation scheme, and a new TBS is added. Further, in the MCS information table for the OFDM, a new TBS is added. As understood from Fig. 12, the extended MCS information table has the same size as the original MCS information table. Therefore, in comparison with the original MCS information table, it is possible to use the MCS information table appropriate for each communication scheme without increasing the number of notified bits. In addition, the extended MCS information table may have the same size as the original MCS information table or may have a different size from the original MCS information table. The MCS information table for the DFT-s-OFDM and the MCS information table for the OFDM may have different sizes.

In addition, the block diagrams used in the description of the above-described embodiment illustrate the blocks of functional units. These functional blocks (constituent units) are realized by arbitrary combination of hardware and/or software. In addition, means for implementing each functional block is not particularly limited. Namely, each functional block may be realized by one physically and/or logically combined device. Alternatively, two or more physically and/or logically separated devices may be directly and/or indirectly connected (for example, in a wired and/or wireless manner), and thus, each functional block may be realized by these plural devices.

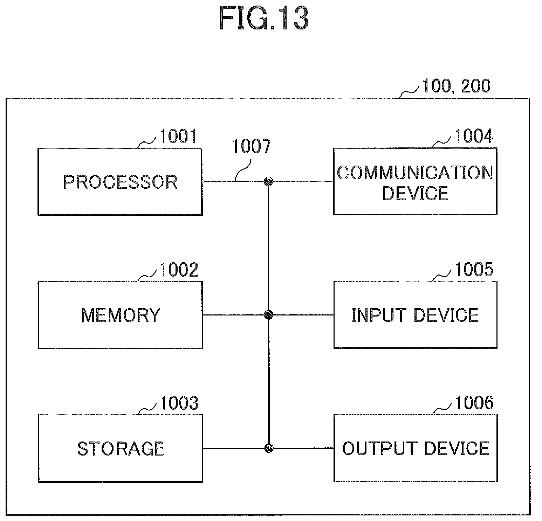

For example, the user equipment 100 and the base station 200 according to an embodiment of the present invention may function as a computer that performs processing of the wireless communication method according to the present invention. Fig. 13 is a block diagram illustrating a hardware configuration of the user equipment 100 and the base station 200 according to the embodiment of the present invention. The user equipment 100 and the base station 200 described above may be physically configured as a computer device including a processor 1001, a memory 1002, a storage 1003, a communication device 1004, an input device 1005, an output device 1006, a bus 1007, and the like.

In addition, in the following description, the term "device" can be replaced with a circuit, a device, a unit, or the like. The hardware configuration of the user equipment 100 and the base station 200 may be configured to include one or a plurality of the respective devices illustrated in the drawings or may be configured not to include some devices.

Each function of the user equipment 100 and the base station 200 is implemented by loading predetermined software (program) on hardware, such as the processor 1001 and the memory 1002, so that the processor 1001 performs computation and controls communication by the communication device 1004, and reading and/or writing of data in the memory 1002 and the storage 1003.

The processor 1001 operates, for example, the operating system to control the whole computer. The processor 1001 may be configured with a central processing unit (CPU) including an interface with a peripheral device, a control device, an arithmetic device, a register, and the like. For example, each component described above may be implemented by the processor 1001.

Additionally, the processor 1001 reads a program (program code), a software module or data from the storage 1003 and/or the communication device 1004 to the memory 1002, and executes various processes according to these. As the program, a program is used which causes a computer to execute at least a part of the operations described in the above-described embodiment. For example, a process by each component of the user equipment 100 and the base station 200 may be implemented by a control program stored in the memory 1002 and executed by the processor 1001. Another functional block may be implemented in a similar manner. Although it is described that the above-described various processes are executed by a single processor 1001, the above-described various processes may be simultaneously or sequentially executed by two or more processors 1001. The processor 1001 may be implemented with one or more chips. Note that the program may be transmitted from a network via an electric communication line.

The memory 1002 is a computer-readable recording medium and is configured with, for example, at least one of a read only memory (ROM), an erasable programmable ROM (EPROM), an electrically erasable programmable ROM (EEPROM), and a random access memory (RAM). The memory 1002 may be referred to as a register, a cache, a main memory (main memory), or the like. The memory 1002 can store executable programs (program codes), software modules, and the like for implementing the wireless communication method according to an embodiment of the present invention.

The storage 1003 is a computer-readable recording medium, and may be configured to include, for example, at least one of an optical disk such as a CD-ROM (Compact Disc ROM), a hard disk drive, a flexible disk, a magneto-optical disk (for example, a compact disk, a digital versatile disk, a Blu-ray (registered trademark) disk, or the like), a smart card, a flash memory (for example, a card, a stick, a key drive, or the like), a floppy (registered trademark) disk, a magnetic strip, and the like. The storage 1003 may be referred to as an auxiliary storage device. The above-described storage medium may be, for example, a database including the memory 1002 and/or the storage 1003, a server, or other appropriate medium.

The communication device 1004 is hardware (transmission/reception device) for performing communication between computers via a wired and/or wireless network and is also referred to as a network device, a network controller, a network card, a communication module, or the like. For example, each component described above may be realized by the communication device 1004.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. In addition, the input device 1005 and the output device 1006 may be configured to be integrated (for example, a touch panel) .

In addition, devices, such as the processor 1001 and the memory 1002, are connected via a bus 1007 for communicating information. The bus 1007 may be configured as a single bus or may be configured as different buses between the devices.

In addition, the user equipment 100 and the base station 200 may be configured to include hardware such as a microprocessor, a digital signal processor (DSP), an application specific integrated circuit (ASIC), a programmable logic device (PLD), and a field programmable gate array (FPDA), and some or all of the functional blocks may be realized by the hardware. For example, the processor 1001 may be implemented with at least one of the above hardware.

Notification of information is not limited to the aspects/embodiments described in this specification, but the notification of information may be performed in other methods. For example, the notification of information may be performed by physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB))), other signals, or a combination thereof. In addition, the RRC signaling may be referred to as an RRC message, for example, an RRC connection setup message, an RRC connection reconfiguration message, or the like.

Each aspect/embodiment described in this specification can be applied to long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, Ultra-WideBand (UWB), Bluetooth (registered trademark), any other systems using an appropriate system and/or next generation systems expanded on the basis of these systems.

In addition, processing procedures, sequences, flowcharts, and the like of each embodiment/modified example described in this specification may be exchanged as long as there is no inconsistency. For example, for the methods described in this specification, the elements of the various steps are presented in an exemplary order and are not limited to a specific order presented.

In this specification, in some cases, the specific operations performed by the base station 200 may be performed by upper nodes. It is apparent that, in a network configured with one or more network nodes having a base station, various operations performed for communication with a terminal may be performed by the base station and/or other network nodes other than the base station (for example, MME, S-GW, or the like is considered, but not limited thereto). In the above description, the case is exemplified in which there is one network node other than the base station. However, a combination of a plurality of other network nodes (for example, MME and S-GW) may be used.

Information or the like can be output from an upper layer (or a lower layer) to a lower layer (or an upper layer). Information may be input/output through a plurality of network nodes.

Input/output information or the like may be stored in a specific location (for example, a memory) or may be managed in a management table. The input/output Information or the like may be overwritten, updated, or added. The output information or the like may be deleted. The input information or the like may be transmitted to another device.

Determination may be made by a value (0 or 1) represented by 1 bit, may be made by a boolean value (true or false), or may be made by comparison of numerical values (for example, comparison with a predetermined value).

Each aspect/embodiment described in this specification may be used alone, may be used in combination thereof, or may be used while being switched according to the execution. In addition, notification of predetermined information (for example, notification of "being X") is not limited to a method performed explicitly. The notification may be made implicitly (for example, not notifying the predetermined information).

The present invention is described above in detail. However, it is apparent to those skilled in the art that the present invention is not limited to the embodiments described in this specification. The present invention may be implemented as modifications and alterations without departing from the gist and scope of the invention as defined by the appended claims. Accordingly, the description of this specification is intended for illustrative purposes and does not have any limiting meaning to the present invention.

The software should be broadly interpreted to mean commands, instruction sets, codes, code segments, program codes, programs, sub-programs, software modules, applications, software applications, software packages, routines, subroutines, objects, executable files, threads, procedures, functions, and the like, regardless of whether the software is referred to as software, firmware, middleware, microcode, hardware description languages, or by any other name.

Software, instructions, information, and the like may also be transmitted and received via a transmission medium. For example, if the software is transmitted from a web site, server, or other remote source using at least one of a wired technology (coaxial cable, optical fiber cable, twisted pair, digital subscriber line (DSL: Digital Subscriber Line, etc.)) and a wireless technology (infrared, microwave, etc.), at least one of these wired technology and wireless technology is included in the definition of a transmission medium.

The information, signals, and the like described in the present disclosure may be represented using any of a variety of different techniques. For example, data, instructions, commands, information, signals, bits, symbols, chips, and the like, which may be referred to throughout the above description, may be represented by voltage, current, electromagnetic waves, magnetic fields or particles, optical fields or photons, or any combination thereof.

Terms described in this specification and/or terms necessary for understanding this specification may be replaced with terms having the same or similar meanings. For example, the channels and/or symbols may be a signal (signaling). The signal may also be a message. Component carriers (CC) may also be referred to as carrier frequencies, cells, frequency carriers, and the like.

The terms "system" and "network" as used in this specification are used interchangeably.

In addition, the information, parameters, or the like described in this specification may be represented by an absolute value, may be expressed as a relative value from a predetermined value, or may be represented by another corresponding information. For example, the radio resource may be indicated by an index.

The names used for the above parameters are not limitative in any way. In addition, mathematical expressions and the like using these parameters may be different from those explicitly disclosed in this specification. Since various channels (e.g., PUCCH, PDCCH, etc.) and information elements can be identified by any suitable name, the various names assigned to these various channels and information elements are not limited in any respect.

A base station can accommodate one or more (for example, three) cells (also referred to as sectors). In the case where the base station accommodates a plurality of cells, the entire coverage area of the base station can be divided into a plurality of smaller areas. Each smaller area can be provided with communication services by a base station subsystem (for example, a small base station RRH (Remote Radio Head) for indoors). The term "cell" or "sector" indicates a portion or all of the coverage area of a base station and/or a base station subsystem that performs communication services in this coverage. In addition, the terms "base station", "eNB", "cell", and "sector" may be used interchangeably in this specification. In some cases, the base station may also be referred to as a fixed station, a NodeB, an eNodeB (eNB), an access point, a femto cell, a small cell, or the like.

In some cases, the mobile station may be referred to as a subscriber stations, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate term by the skilled in the art.

In some cases, the terms "determining" and "deciding" used in this specification may include a wide variety of operations. The "determining" or the "deciding" may include something regarded as "determining" or "deciding" of, for example, calculating, computing, processing, deriving, investigating, looking up (for example, looking up in a table, a database, or other data structures), or ascertaining. In addition, the "determining" or the "deciding" may include something regarded as "determining" or "deciding" of receiving (for example, receiving information), transmitting (for example, transmitting information), input, output, or accessing (for example, accessing data in memory). In addition, the "determining" or the "deciding" may include something regarded as "determining" or "deciding" of resolving, selecting, choosing, establishing, comparing, or the like. In other words, the "determining" or the "deciding" may include something regarded as "determining" or "deciding" of some operation.

The terms "connected," "coupled," or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. For example, "connection" may be read as "access". Two elements, when used in this specification, can be considered to be mutually "connected" or "coupled by using one more more wires, cables and/or printed electrical connections, and, as some non-limiting and non-inclusive examples, by using electromagnetic energy such as electromagnetic energy with a wavelength in a radio frequency range, a microwave range, and an optical range (both visible and invisible).

The reference signal can also be abbreviated as an RS (Reference Signal) and may be referred to as a pilot by the standard applied.

The phrase "on the basis of" used in this specification does not denote "on the basis of only" unless explicitly stated otherwise. In other words, the phrase "on the basis of" denotes both "on the basis of only" and "on the basis of at least".

Any reference to elements using notation such as "first", "second", or the like as used in this specification do not generally limit the amount or order of the elements. In this specification, the notation may be used as a convenient method to distinguish two or more elements. Accordingly, references to the first and second elements do not imply that only two elements may be adopted or that in some way the first element must precede the second element.

"Means" in the configuration of each of the above devices may be replaced with "unit", "circuit", "device", or the like.

As long as the terms "include", "including" and variations thereof are used in this specification or claims, these terms are intended to be inclusive similarly to the term "comprising". In addition, the term "or" used in this specification or claims is intended not to be an exclusive OR.

The radio frame may be configured to include one frame or a plurality of frames in the time domain. In the time domain, the one frame or each of the frames may be referred to as a subframe. The subframe may be further configured to include one slot or a plurality of slots in the time domain. The slot may be further configured to include one symbol or a plurality of symbols (OFDM symbol, SC-FDMA symbol, and the like) in the time domain. The radio frame, subframe, slot, and symbol represent time units for transmitting a signal. The radio frame, the subframe, the slot, and the symbol may be differently referred to. For example, in the LTE system, the base station performs scheduling for allocating radio resources (such as a frequency bandwidth or a transmission power that can be used in each mobile station) to each mobile station. The minimum time unit of scheduling may be referred to as a transmission time interval (TTI). For example, one subframe may be referred to as a TTI, or a plurality of consecutive subframes may be referred to as a TTI, or one slot may be referred to as a TTI. A resource block (RB) is a resource allocation unit in the time domain and the frequency domain, and the resource block may include one subcarrier or a plurality of consecutive subcarriers in the frequency domain. In addition, in the time domain of the resource block, the resource block may include one symbol or a plurality of symbols and may be one slot, one subframe, or one TTI in length. One TTI and one subframe each may be configured to include one resource block or a plurality of resource blocks. The above-described structure of the radio frame is merely an example, and the number of subframes included in the radio frame, the number of slots included in the subframe, the number of symbols and resource blocks included in the slot, and the number of subcarriers included in the resource block may be variously changed.

The embodiments of the present invention are described above in detail. However, the present invention is not limited to the above-described specific embodiments, and various modifications and alterations may be made within a scope of the gist of the present invention described in the claims.

This patent application is based on and claims priority to Japanese Patent Application No. 2016-215705 filed on November 2, 2016, and the entire content of Japanese Patent Application No. 2016-215705 is incorporated herein by reference.

### LIST OF REFERENCE SYMBOLS

- 10: radio communication system
- 100: user equipment
- 110: transceiver
- 120: signal processor
- 200: base station
- 210: scheduler
- 220: scheduling information notification unit

## Claims

1. A base station comprising:
a scheduler configured to schedule radio resources to user equipment capable of performing uplink transmission by a plurality of communication schemes; and
a scheduling information notification unit configured to notify scheduling information indicating the radio resources scheduled to the user equipment for the uplink transmission,
wherein the scheduling information indicates a start radio resource block group among contiguously scheduled radio resource block groups and a number of the scheduled radio resource block groups.

2. A base station comprising:
a scheduler configured to schedule radio resources to user equipment capable of performing uplink transmission by a plurality of communication schemes; and
a scheduling information notification unit configured to notify scheduling information indicating the radio resources scheduled to the user equipment for the uplink transmission,
wherein the scheduling information indicates a start radio resource block among radio resource blocks periodically scheduled, a number of the scheduled radio resource blocks, and an allocation pattern of the scheduled radio resource blocks.

3. A base station comprising:
a scheduler configured to schedule radio resources to user equipment capable of performing uplink transmission by a plurality of communication schemes; and
a scheduling information notification unit configured to notify scheduling information indicating the radio resources scheduled to the user equipment for the uplink transmission,
wherein the scheduling information indicates a combination of radio resource blocks defined for each communication scheme and presence or absence of allocation of each radio resource block in the combination.

4. The base station according to any one of claims 1 to 3, wherein an upper limit or a lower limit of the number of radio resource blocks that can be allocated is set for each communication scheme.

5. The base station according to any one of claims 1 to 4, wherein the scheduling information notification unit further notifies MCS information configured for each communication scheme to the user equipment.

6. User equipment capable of performing uplink transmission by a plurality of communication schemes, the user equipment comprising:
a transceiver configured to transmit and receive a radio signal to and from a base station; and
a signal processor configured to process the radio signal,
wherein the transceiver transmits an uplink signal generated by the signal processor to the base station by a selected communication scheme according to scheduling information notified from the base station according to any one of claims 1 to 5.
